# EUROPEAN PATENT APPLICATION

(11) **EP 1 102 411 A2**
(43) Date of publication of application: **23.05.2001**
(21) Application number: 00302096.3
(22) Date of filing: 15.03.2000
(51) Int. Cl.: H04B 1/38, H04M 1/02

(54) **Mobile phone battery pack**

(30) Priority: 15.11.1999 GB 9926999
(71) Applicant: China-UK Consultants Limited, Hong Kong (CN)
(72) Inventor: Grassi, Carmen, Whampoa Garden, Hung Horn, Kowloon (HK)
(74) Representative: Godwin, Edgar James

(57) **Abstract**

A battery pack (10) for use with a mobile phone having a body (20) and an internal phone circuit, said battery pack (10) comprising a body having a rear side facing the body (20) of the mobile phone when the battery pack (10) is attached. The battery pack body is provided with at least two sim card slots (11 and 12) on the rear side for receiving respective sim cards (30A and 30B) and the battery pack (10) incorporates a control circuit (40) for selectively enabling electrical connection of sim cards (30A and 30B) received in the respective slots (11 and 12) to the phone circuit of the mobile phone upon the mobile phone being switched on.

## Description

The present invention relates to a battery pack for a mobile phone.

### BACKGROUND OF THE INVENTION

Most existing mobile phones have a phone body and a detachable rechargeable battery pack for supplying power to the phone body. The phone body incorporates an operating circuit that requires the connection of a sim card for operation. The primary function of the sim card is to identify the telephone number of an authorised user account. It also serves to enable certain telephone functions as allocated to that account and to store certain settings including a personal phone book for that user.

In a conventional mobile phone, the sim card is held by the phone body and is usually removable for replacement by another sim card of a different user and/or a different telephone number. Sim card replacement often requires the removal of an existing sim card and subsequent insertion of another sim card. For most mobile phone models in addition, the battery pack must first be removed before access can be gained to the sim card.

The invention seeks to mitigate or at least alleviate such inconvenience against multiple users and/or use of multiple numbers by providing an improved battery pack for a mobile phone.

### SUMMARY OF THE INVENTION

According to the invention, there is provided a battery pack for use with a mobile phone having a body and an internal phone circuit, which battery pack comprises a body provided with at least two sim card slots for receiving respective sim cards and incorporates a control circuit for selectively enabling electrical connection of sim cards received in the respective slots to the phone circuit of the mobile phone upon the mobile phone being switched on.

In a preferred embodiment, the body of the battery pack has a rear side facing the body of the mobile phone when the battery pack is attached, and the sim card slots are provided on the rear side.

Preferably, said at least two slots have respective sets of sim card contacts which are connected in parallel with each other to the control circuit.

More preferably, the control circuit includes an integrated circuit which has respective output pins connected to the two sets of sim card contacts and is arranged to generate an enabling signal at the output pins sequentially for sim cards received in the respective slots.

Further more preferably, the integrated circuit is arranged, upon the mobile phone being switched off and on, to generate a said enabling signal at the next output pin for enabling the next sim card from the previous output pin successfully enabling the previous sim card.

Further more preferably, the integrated circuit is arranged, upon failing to enable a sim card, to generate a said enabling signal at the next output pin for enabling the next sim card from the previous output pin having failed to enable a sim card.

In a preferred embodiment, the battery pack includes a separate connector which is in the form of a small circuit board having practically the same shape and size as a standard sim card for insertion into an existing sim card slot with sim card contacts of the mobile phone, said connector having contacts on opposite sides for connecting the control circuit of the battery pack to the phone circuit of the mobile phone via the existing sim card contacts.

More preferably, the contacts of the connector for connection to the control circuit of the battery pack are in the form of pushpins.

The invention also provides a mobile phone in combination with the aforesaid battery pack.

### BRIEF DESCRIPTION OF DRAWINGS

The invention will now be more particularly described, by way of example only, with reference to the accompanying drawings, in which:

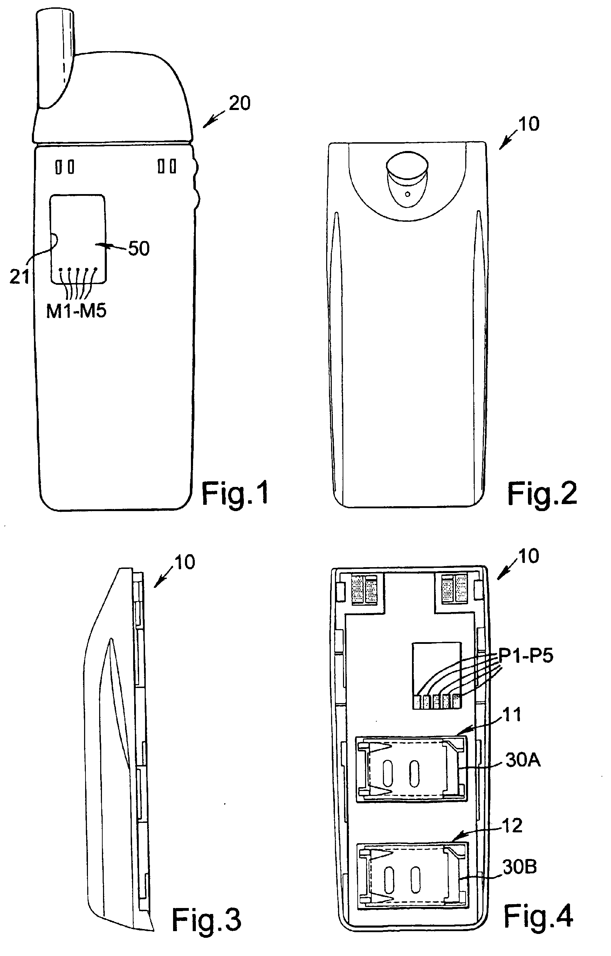

Figure 1 is a rear view of the phone body of a conventional mobile phone, without an attached battery pack;
Figure 2 is a front view of an embodiment of a battery pack in accordance with the invention, for use with the mobile phone body of Figure 1;
Figure 3 is a right side view of the battery pack of Figure 2;
Figure 4 is a rear view of the battery pack of Figure 2, showing two sim cards held by the battery pack; and
Figure 5 is a circuit diagram of a circuit of the battery pack of Figure 2, for controlling the use of the sim cards.

### DETAILED DESCRIPTION OF PREFERRED EMBODIMENT

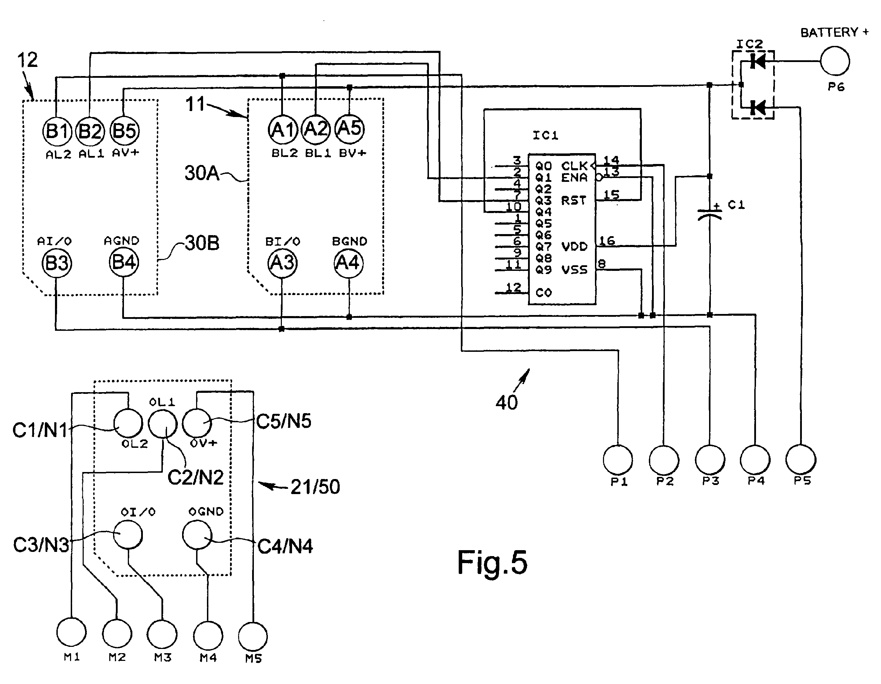

Referring to the drawings, there is shown a battery pack 10 embodying the invention for use with a phone body 20 of a conventional mobile phone, for supplying power to the internal phone circuit of the phone body 20. In contrary to the existing mobile phone systems as described above, the phone body 20 does not physically carry a sim card, which is instead installed the battery pack 10. Despite of that, a standard slot 21 having five associated contacts C1-C5 (Figure 5) for holding a sim card for the phone body 20 still exists.

The battery pack 10 is provided, on the rear side of its body, with two (standard) slots 11 and 12 for receiving respective sim cards 30A and 30B. The slots 11 and 12 have corresponding sim card contacts A1-A5 and B1-B5, as in the case of the standard sim card slot 21 on the phone body 20. The battery pack 10 incorporates a control circuit 40 in electrical connection to the contacts A1-A5 and B1-B5 for controlling the operation of the sim cards 30A and 30B.

The control circuit 40 is implemented by two integrated circuits IC1 and IC2 and a capacitor C1 and includes a row of five terminal contacts P1-P5 and a power terminal P6 (connected to the battery cells of the battery pack 10).

The first integrated circuit IC1 is provided between the sim card contacts A1-A5 and B1-B5 (themselves being connected in parallel with each other) and the terminal contacts P1-P5, for selectively enabling electrical connection of either set of the sim card contacts A1-A5 and B1-B5 to the terminal contacts P1-P5 respectively. The terminal contacts P1-P5 are exposed on the rear side of the battery pack 10 and are provided at a position matching with that of the sim card slot 21 of the phone body 20. The second integrated circuit IC2 is provided between the power terminal P6 and the other components of the control circuit 40, for supplying battery power from the former to the latter.

The battery pack 10 comes with a separate connector 50, which is in the form of a small PCB circuit board having practically the same shape and size as a standard sim card for insertion into the slot 21 of the phone body 20. The connector 50 is provided with five sim card terminals N1-N5 on one side and a row of five contact pushpins M1-M5 on the opposite side in electrical connection to the terminals N1-N5 respectively.

In use, the connector 50 is inserted into the slot 21 of the phone body 20 like a standard sim card, with its terminals N1-N5 facing inwards for coming into contact with the sim card contacts C1-C5 of the slot 21. The pushpins M1-M5 face outwards for coming into contact with the corresponding terminal contacts P1-P5 on the battery pack 10, upon attachment of the battery pack 10 onto the phone body 20. This results in connection of the control circuit 40 and in turn the sim cards 30A and 30B to the phone circuit of the phone body 20, via the pre-existing sim card slot 21 and its associated contacts C1-C5, for normal mobile phone operation.

Upon being switched on, the phone body 20 obtains power from the battery pack 10 by means of its sim card slot contact C5 via the terminal N5 and pushpin M5 of the connector 50 and the terminal contact P5, integrated circuit IC2 and power terminal P6 of the control circuit 40. In response, the phone circuit of the phone body 20 generates a logic high signal at its sim card slot contact C2 for triggering the integrated circuit IC1 at its CLK pin, via the terminal N2, pushpin M2 and terminal contact P2, to cause its output pin Q1/Q2/Q3/Q4 to generate a logic high signal in sequence.

Meanwhile, as the IC output pins Q1 and Q3 are connected to the contacts A2 and B2 of the sim card slots 11 and 12 respectively for enabling the corresponding sim cards 30A and 30B, only the first one of them which receives an output logic high signal will be enabled. Accordingly, only one of the sim cards 30A and 30B will be triggered every time the phone body 20 is switched on.

Also meanwhile but later, the phone circuit of the phone body 20 will generate a logic low signal at its sim card slot contact C2 for triggering the integrated circuit IC1 at its CLK pin to try to read information stored in the triggered sim card 30A/30B via the contact C1, terminal N1, pushpin M1 and terminal contact P1 and via the contact C3, terminal N3, pushpin M3 and terminal contact P3. If the information read is valid, the phone body 20 will establish connection with the external telephone network and start operation in a standby mode.

The phone body 20 may fail to read valid information from the sim card slot 11/12 first attempted due to, for example, the absence of a sim card 30A/30B in that slot 11/12 or the presence of an invalid sim card. In that case, the phone circuit of the phone body 20 will generate another logic high signal at its sim card slot contact C2 in order to trigger the integrated circuit IC1 to generate another logic high signal at the next output pin Q1/Q2/Q3/Q4 (from the previous condition) for attempting to enable the other of the sim cards 30B and 30B.

In general, the logic high signal for sim card selection as provided by the integrated circuit IC1 will shift from its output pins Q1-Q4 sequentially, and back to pin Q0 in cycles. Once a particular sim card 30A/30B has been enabled successfully, the integrated circuit IC1 will stay in that condition of the last output pin Q1/Q2/Q3/Q4 having taken action. When the phone body 20 is switched off and on again, the next output pin Q2/Q3/Q4/Q1 (from the previous condition) will take action instead. Accordingly, only one of the sim cards 30A and 30B will be triggered, and they take turns, every time the phone body 20 is switched on.

If the user wishes to use the telephone number of the other sim card 30B/30A, all he needs to do is to switch off and on the phone body 20 once, without the need to replace any sim card. The control circuit 40 of the subject battery pack 10 can actually be used for up to four sim cards, by reason of the integrated circuit IC1 having four output pins Q1-Q4.

Although the sim card slots 11 and 12 are provided on the rear side of the body of the battery pack 10 as described, they may be provided elsewhere on or in the battery pack body. It is envisaged that the mobile phone body 20 may be modified to have direct terminals equivalent to the contact pushpins M1-M5 of the connector 50. If so, a separate connector 50 will not be needed.

The invention has been given by way of example only, and various other modifications of and/or alterations to the described embodiment may be made by persons skilled in the art without departing from the scope of the invention as specified in the appended claims.

## Claims

1. A battery pack (10) for use with a mobile phone having a body (20) and an internal phone circuit, which battery pack (10) comprises a body, characterised in that the body is provided with at least two sim card slots (11 and 12) for receiving respective sim cards (30A and 30B) and incorporates a control circuit (40) for selectively enabling electrical connection of sim cards (30A and 30B) received in the respective slots (11 and 12) to the phone circuit of the mobile phone upon the mobile phone being switched on.

2. The battery pack (10) as claimed in claim 1, characterised in that the body of the battery pack (10) has a rear side facing the body (20) of the mobile phone when the battery pack (10) is attached, and the sim card slots (11 and 12) are provided on the rear side.

3. The battery pack (10) as claimed in claim 1, characterised in that said at least two slots (11 and 12) have respective sets of sim card contacts (A1-A5 and B1B5) which are connected in parallel with each other to the control circuit (40).

4. The battery pack (10) as claimed in claim 3, characterised in that the control circuit (40) includes an integrated circuit (IC1) which has respective output pins (Q1 and Q3) connected to the two sets of sim card contacts (A1-A5 and B1-B5) and is arranged to generate an enabling signal at the output pins (Q1 and Q3) sequentially for sim cards (30A and 30B) received in the respective slots (11 and 12).

5. The battery pack (10) as claimed in claim 4, characterised in that the integrated circuit (IC1) is arranged, upon the mobile phone being switched off and on, to generate a said enabling signal at the next output pin (Q3/Q1) for enabling the next sim card (30B/30A) from the previous output pin (Q1/Q3) successfully enabling the previous sim card (30A/30B).

6. The battery pack (10) as claimed in claim 5, characterised in that the integrated circuit (IC1) is arranged, upon failing to enable a sim card (30A/30B), to generate a said enabling signal at the next output pin (Q3/Q1) for enabling the next sim card (30B/30A) from the previous output pin (Q1/Q3) having failed to enable a sim card (30A/30B).

7. The battery pack (10) as claimed in claim 1, characterised in including a separate connector (50) which is in the form of a small circuit board having practically the same shape and size as a standard sim card (30A/30B) for insertion into an existing sim card slot (21) with sim card contacts (C1-C5) of the mobile phone, said connector (50) having contacts (N1-N5) on opposite sides for connecting the control circuit (40) of the battery pack (10) to the phone circuit of the mobile phone via the existing sim card contacts (C1-C5).

8. The battery pack as claimed in claim 7, characterised in that the contacts (N1-N5) of the connector (50) for connection to the control circuit (40) of the battery pack (10) are in the form of pushpins (M1-M5).

9. A mobile phone in combination with a battery pack (10) as claimed in claim 1.
